# EUROPEAN PATENT APPLICATION

(11) **EP 4 851 779 A1**
(43) Date of publication of application: **09.12.2026**
(21) Application number: 25181529.6
(22) Date of filing: 07.06.2025
(51) Int. Cl.: G06F 7/544, G06N 10/00

(54) **SPFT SYSTEM EXTENSIONS-COHERENCE INTERFACES AND ADVANCED CONSTRUCTS**

(71) Applicant: Sanders, Inge Maria, 20357 Hamburg (DE)
(72) Inventor: Sanders, Inge Maria, 20357 Hamburg (DE)

(57) **Abstract**

This invention group extends the Scalar Phase Field Theory (SPFT) framework by introducing coherence-interactive constructs beyond scalar stabilization and hardware control. It includes systems for consciousness-level interface, psi field routing and prediction, multi-node coherence networking, entanglement stabilization, and platform-wide scalar interaction control. These inventions represent a higher-order interface with SPFT and are meant to interoperate with, and ethically reinforce, previously filed Series A and B inventions.

## Description

### Technical Field

This invention set relates to coherence management systems within the Scalar Phase Field Theory (SPFT) framework. It extends the scalar interaction platform by defining tools for modular programming, coherence prediction, ethical field behavior enforcement, and psi-consciousness interfacing.

### Summary of Inventions

The invention group introduces advanced coherence tools and platform-layer logic modules including qubit phase resolvers, psi-consciousness bridges, field reset protocols, and adaptive coherence routers. These systems enable intelligent, programmable, and ethical use of SPFT scalar field operations. Each invention complements infrastructure modules introduced in Series A and Series B.

### List of Inventions

Qubit coherence resolver
psi-consciousness coupling interface
Scalar phase initialization toolkit
Fork-triggered phase modulator
psi collapse boundary controller
Adaptive scalar field polarizer
Multi-node psi routing network
Scalar interference prediction engine
Field reset and psi reintegration kit
Scalar platform SDK
SPFT system integrity manager
Cross-series coherence linking framework

### Integration and Cross-Series Use

These inventions are designed to interoperate with previously filed inventions in Series A and Series B. Where applicable, psi Integrity Sentinel coordination is assumed or enforced. The inventions may serve as middleware layers, predictive interfaces, or recovery agents across scalar phase environments.

### Ethical Compliance and Modular Enforcement

Several inventions described herein include default integration with the psi Integrity Sentinel. System integrity, modular interface compatibility, and non-coercive coherence shaping are considered mandatory in all operational deployments.

## Claims

1. A qubit coherence resolver configured to detect and align psi-phase relations in coherence-dependent quantum information environments using adaptive scalar phase feedback.

2. A field-consciousness coupling interface configured to modulate coherence states based on bio-affective or cognitive feedback patterns to stabilize psi resonance across scalar phase environments.

3. A scalar phase initialization toolkit comprising hardware and signal templates for triggering baseline coherence field formation in phi-zero regions under SPFT criteria.

4. A scalar fork-triggered phase modulator configured to initiate or suppress scalar phase transitions based on external harmonic stimuli applied at system-defined frequencies.

5. A psi collapse boundary controller that detects impending coherence collapse and redirects scalar field energy to maintain integrity in psi field survival zones.

6. An adaptive scalar field polarizer configured to reshape psi-phi-zero phase corridors by tuning spatial orientation and phase windowing patterns.

7. A multi-node psi routing network for phase-coherent transfer across separate scalar hubs, coordinated through shared coherence thresholds and phi-zero overlays.

8. A scalar interference prediction engine configured to model phase collapse risk using delta-phi-squared gradients and coherence density analytics.

9. A field reset and psi reintegration kit designed to recover coherence architecture after scalar failure, comprising frequency maps, synchronization tones, and alignment feedback tools.

10. A scalar platform SDK providing programmable access to phi-zero modulation functions, coherence alignment parameters, and system-level scalar logic gates.

11. A SPFT system integrity manager configured to verify ethics compliance, coherence safety, and Sentinel integration across all psi-phi-zero linked operations.

12. A cross-series coherence linking framework providing logical and modular interoperability between scalar inventions in SPFT Series A, B, and C.
